(19) Europäisches Patentamt
European Patent Office
Office européen des brevets

(11) EP 3 068 574 B1

(12) EUROPEAN PATENT SPECIFICATION

(45) Date of publication and mention
of the grant of the patent:
28.02.2018 Bulletin 2018/09

(51) Int Cl.:
B23K 15/00 (2006.01)     B23K 26/24 (2014.01)
B23K 26/26 (2014.01)     B23K 26/32 (2014.01)
B23K 26/30 (2014.01)     B23K 31/02 (2006.01)

(21) Application number: 13798375.5

(22) Date of filing: 14.11.2013

(86) International application number:
PCT/GB2013/053004

(87) International publication number:
WO 2015/071621 (21.05.2015 Gazette 2015/20)

(54) **METHOD OF WELDING FIRST AND SECOND METALLIC WORKPIECE WITH COLD SPRAYING A LAYER OF WELD MODIFYING MATERIAL TO ONE OF THE SURFACES**

VERFAHREN ZUM SCHWEISSEN EINES ERSTEN UND EINES ZWEITEN METALLISCHEN WERKSTÜCKS MIT KALTEM AUFSPRITZEN EINER SCHICHT AUS SCHWEISSNAHTMODIFIZIERUNGSMATERIAL AN EINE DER OBERFLÄCHEN

PROCÉDÉ DE SOUDAGE DE PREMIÈRE ET SECONDE PIÈCES MÉTALLIQUES PAR LA PULVÉRISATION À FROID D'UNE COUCHE DE MATÉRIAU DE MODIFICATION DE SOUDURE SUR L'UNE DES SURFACES

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(43) Date of publication of application:
21.09.2016 Bulletin 2016/38

(73) Proprietor: The Welding Institute
Cambridge CB21 6AL (GB)

(72) Inventors:
• MITCHELL, Timothy Phillip
Cambridge CB21 6AL (GB)

• SMITH, Sullivan Manning
Cambridge CB21 6AL (GB)

(74) Representative: Gill Jennings & Every LLP
The Broadgate Tower
20 Primrose Street
London EC2A 2ES (GB)

(56) References cited:
JP-A- S58 188 585        US-A1- 2006 065 639
US-A1- 2008 035 615      US-A1- 2008 102 308

## Description

### Field of the Invention

The present invention relates to a method of welding first and second thin metallic workpieces together (see, for example, US4665294A), particularly with a view to producing welds with reduced tendency to cracking. The invention includes methods for welding crack-sensitive alloys, such as aluminium alloys, using various welding techniques including power beams, together with associated pre-forms and methods for incorporating these in automotive, or other assemblies.

### Background to the Invention

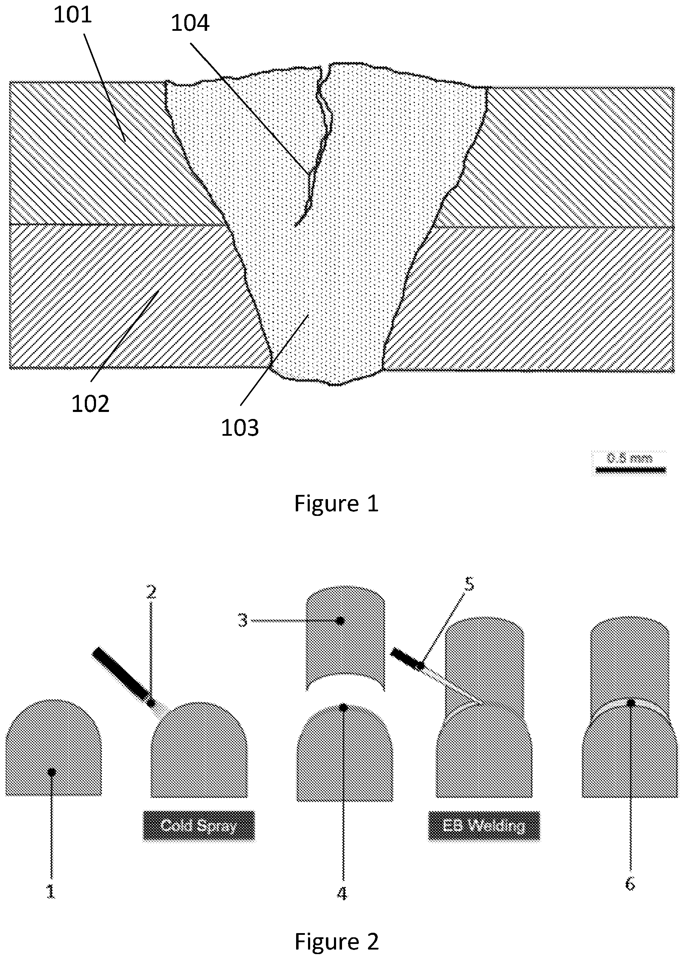

Solidification cracking occurs when welding various metal alloys due to the inability of liquid metal to fill the spaces between solidifying weld metal. This can be due to weld pool strain being too high (insufficient strength in the weld to withstand contraction stresses) and/or not enough liquid or liquid metal being able to penetrate the spaces between solidifying weld metal. These spaces are then opened up by shrinkage strains. In welds carried out at high travel speeds, a relatively long tear-drop shaped weld pool is formed. The cooling, solidifying tail of the weld pool is difficult to feed from the hot, liquid front, especially in alloys that contain phases with wide freezing ranges. A weld crack is illustrated in Figure 1. Here a first workpiece in the form of plate 101 has been overlapped with a second workpiece in the form of plate 102. A weld 103 has been used to join the workpieces 101,102. However, a significant crack 104 can be seen in the weld zone.

Taking a practical example, "6xxx" series aluminium alloys are well known in the art and are, generally speaking, aluminium alloys containing magnesium and silicon. These alloys are used due to their advantageous heat-treatment and machining properties, which enable the forming of relatively strong and attractively surface-finished panels, among other applications. Susceptibility to cracking is a well-known issue when power beam welding 6xxx-series aluminium alloys. To prevent cracking the weld metal composition is often modified by addition of 4xxx series filler, in wire or foil form. However, when welding complex assemblies conventional fillers may be difficult to introduce due to limited access or, in the case of power beam processes, potentially high process speeds can be limited by the need to introduce fillers, foils or shims on-line, making the processes commercially unattractive. Replacing 6xxx alloys wholesale with 4xxx is not convenient; while Al-Si alloys such as 4xxx are well-known casting alloys with high wear resistance, a low thermal-expansion coefficient, good corrosion resistance and improved mechanical properties at a wide range of temperatures, their machinability and other characteristics are not particularly good.

Aluminium alloys 6016, 6061 and 6082 are representatives of materials which are crack sensitive when welded without the addition of appropriate filler material. The use of aluminium alloy 4047, or other aluminium-silicon alloys introduced into the weld as wire or foil, can eliminate solidification cracking in these alloys due to the high silicon content.

The nomenclature used herein to represent aluminium alloy types is in accordance with the International Alloy Designation System, as those skilled in the art will appreciate. The first digit represents the 'series', whilst the next three represent the specific alloy. Where 'xxx' is used, this indicates that various alloys in the series can be substituted.

Power beam welding methods, for example using an electron or laser beam, are commonly used for joining a wide range of materials, including metals. These are versatile, fusion-based processes, which have found a number of applications in industry; from welding of car bodies and aircraft fuselage panels to the welding of shipbuilding structures. These processes can be used to weld a variety of materials including, carbon steels, stainless steels, titanium, aluminium and nickel alloys.

Electron Beam (EB) welding locally melts the material at the interface of two parts, forming a high integrity, normally "autogenous", joint after solidification. EB welding usually (but not exclusively) takes place in a clean vacuum environment, can work from long stand-off distances and with a wide range of materials and workpiece thicknesses.

Due to their charged nature, electron beams can be manipulated at incredibly high speeds using magnetic coils to effect multiple welds simultaneously. A focused electron beam is very intense and produces a high aspect ratio (narrow weld width: large weld depth) weld and is often chosen where thermal damage and excess distortion must be avoided or thick sections need to be welded in a single pass. The process is ideal for many aluminium alloy applications such as complicated heat exchanger assemblies. Welding travel speeds greater than 30 metres per minute are achievable in certain material combinations.

Laser welding is a line-of-sight, non-contact joining process characterised by its highly focused energy density, which is capable of producing high aspect ratio welds in many materials, including metals. It can be performed at atmospheric pressure, although inert gas shielding is required for more reactive materials. Furthermore, laser welding is of a relatively low heat input, especially when compared with arc welding processes.

Both processes can produce beams which can be focused to sub-millimetre-sized diameter spots, enabling high power densities to be applied to the joint. These power densities are sufficient to form a 'keyhole' weld below the laser beam impingement point. High productivity can come from the fast processing speeds that can be used in thinner materials, or the fact that just a single pass is needed to make a deep penetration weld in thicker materials. These productivity advantages combined with automated welding, can be used in reliable, repeatable, autonomous welding operations. As heat inputs are ordinarily an order of magnitude lower than arc welding processes, laser welding is also attractive when welding components requiring minimal thermal distortion, or materials favouring low heat input.

The industrial uptake of laser welding is driven by requirements such as high volume production, high weld quality and/or low weld distortion. An especially flexible and high speed implementation of laser welding is via the use of mirror galvanometer systems for scanned laser welding. Welding with a scanned laser beam (commonly referred to as remote welding) is increasing in popularity for manufacturing articles from steel, due to its high reliability and extremely high production speed (welding speeds >20m/min are readily used).

Closures in automotive structures include the main 'hang-on' parts; doors, trunk and bonnet. These parts are usually assembled 'off-line' and only integrated into the auto-body towards the end of the production line. For environmental and vehicle performance reasons, the automotive industry is looking to achieve weight savings and improved corrosion life by adopting aluminium for many of these 'hang-on' parts. Presently self-piercing riveting, clinching or hemming in combination with adhesive bonding are the predominant joining methods for aluminium closures. Unfortunately these approaches are slow. Furthermore the application of the adhesives can be messy and problematic. In certain cases adhesive use is limited due to the toxic nature of the epoxies used.

Welding with a high speed power beam cannot currently be successfully applied to 6xxx-series aluminium articles, as most high speed power beam processes are autogenous in nature and it is difficult to add filler materials on-line and prevent cracking, as described above. It is possible to prevent cracking by the addition of silicon-containing filler material, which alters the composition of the weld zone to a 'non-crack sensitive' state. Unfortunately, with regard to filler additions, remote welding relies on a large stand-off distance from the scanner to the work piece, and this combined with high process speeds, makes the use of conventionally applied filler wires impossible.

A partial solution to this problem has been proposed using a 3-part casting process to produce a 6xxx alloy cored sheet with 4xxx (12% Si) outer surfaces. When welded, the outer surface mixes into the weld zone preventing cracking. One disadvantage of this process is that the entire surface area of the sheet is a 4xxx alloy which leads to added weight, reduced formability and unfavourable mechanical properties. The high cost of this 3-part casting approach is also a major barrier to acceptance, especially in cost-sensitive markets such as the automotive market.

There have been other proposals to address this cracking problem when welding certain aluminium alloys.

US6932879B discloses a method of adhesive bonding of lapped workpieces with gap-sustaining inclusions for gas release during welding. This includes the addition of crack-reducing silicon-rich additives for 6xxx welding, either in the adhesive or on the workpiece surface in the form of a powder, suspension, wire, tablet, tape or foil. The methods disclosed in this publication carry the same limitations as adhesive bonding, as discussed below

US4665294A discloses the use of a 4047 aluminium alloy shim or filler material for welding 6061 aluminium electronic housings, the use of a 4047 lid joined to a 6061 housing and the use of a silicon-containing slurry. This publication also a system for delivering fine powdered alloying metal (specifically high-purity silicon) using electrostatic spraying to the surface of a 5052 or 6xxx aluminium prior to laser or EB welding.

Electrostatic spraying uses a spray gun that imparts an electrical charge on the sprayed powder particles whilst the substrate to be coated is earthed or grounded. This process carries several significant disadvantages, including inconsistent coating formation due to charge build up, limited layer thickness and poor adhesion, which limits storage and machining operations prior to welding. In particular applications, particle adhesion is crucial. For instance, in automotive body shop, loose left-over particles are highly undesirable and can lead to poorly finished panels which are more liable to corrosion issues (e.g. in-service galvanic corrosion). It is notable that the silicon electrostatically deposited in this disclosure is not a true metal (silicon is a metalloid). It is fortuitous that silicon is beneficial to prevent cracking in aluminium welds, although it leads to various problems when compared with the use of metal alloyed silicon, since it is not possible for this method to create adhered, uniform metal coatings.

It is an objective of the invention to improve welding processes so as to enable for example the successful welding of crack-sensitive alloys.

## Summary of the Invention

In accordance with the invention we provide a method of welding first and second thin metallic workpieces together as defined in claim 1, wherein each of the first and second thin metallic workpieces having a thickness of less than 1.5mm, the method comprising:

  a. applying a layer of weld modifying material to a surface of one or each of the first and second metallic workpieces using a cold spraying, wherein the weld modifying material is a metallic material and wherein each of the weld modifying material, the first metallic workpiece and the second metallic workpiece have a majority elemental component that is the same; and,

b. welding the first and second metallic workpieces together such that the weld modifying material is incorporated into the weld.

We have realised that it is critical to the welding process to be able to supply a consistent amount of weld modifying material having a well-controlled composition. This is achieved in the present invention by the use of a cold spraying process. These processes allow a layer of weld modifying material to be carefully positioned along the path of a surface to be welded, this layer having a well-controlled thickness and composition, together with excellent mechanical stability. The method advantageously provides for accurate placement of modifying material, quickly and with beneficial mechanical properties for later processes, such as forming and/or welding. The method is particularly suited to the use of high-speed beam welding processes, and in many cases without the use of shielding gas due to the coverage of the welding surface by the modifying material. The mechanical stability of the modifying material according to the spraying processes provides for the use of pre-formed assemblies (which can be stored off-line) with well-adhered coatings that can be machined. In the case of cold spray processing, thin section assemblies may be treated with little thermal damage.

The weld modifying material may be chosen to control a number of mechanical properties of the weld material. One such property where particular benefit has been found is in the control of weld cracking behaviour.

For example, the method comprises the steps of coating a crack-sensitive metal substrate with an alloying metal suitable for modifying the metallurgical properties of the crack-sensitive metal (the 'modifying material') using a cold spray technique; and subsequently carrying out a welding operation whereby the created weld metal is crack-free. The weld modifying material is supplied to the weld during the welding process such that typically the weld modifying material mixes with the material from the first and second workpieces within the weld pool. The choice of a suitable modifying material ensures that a desired composition and microstructure is produced during and as a result of the welding process.

The invention may be applied to a large number of well-known welding processes including arc welding processes. It may be used with welding processes which have separately supplied filler materials. It is however particularly advantageous when used in conjunction with autogenous welding processes, that is where no filler materials are added during the welding process. This includes gas-tungsten arc welding but is most beneficial in high speed welding processes (greater than 1 metre per minute weld travel speed). The provision of the modifying material at the joint region prior to the arrival of the weld pool means that the modifying material is immediately available in the weld pool and therefore no limitations are placed upon the weld speed, unlike in known processes. High-speed power beam techniques envisaged for use with the invention, to particular advantage, include laser welding and electron beam (EB) welding methods.

Cold spraying processes provide a means of producing a layer of predetermined thickness, composition and good adhesion.

In comparative examples, thermal spray processes can be used to deposit thick, well-adhered and uniform coatings of both metals and non-metals to a workpiece. The term 'thermal spray' can encompass a wide variety of coating processes in which a powder, wire, rod, slurry or liquid feedstock is heated to (or near) its melting point and projected at high velocity toward a substrate. Thermal spray methods include flame spraying, arc spraying, plasma spraying, High Velocity Oxy Fuel (HVOF) spraying and Detonation Gun (D-Gun) spraying. Thermal spray methods generally allow accurate placement of the weld modifying material, which is important in reducing unnecessary material deposits.

The cold spray process (otherwise known as Cold Gas Dynamic Spraying) is used for coating applications where lower spray temperatures are beneficial. In the cold spray approach, solid powders (normally around 10-50 micrometres in diameter) are accelerated in supersonic gas jets to velocities of between 200-1000 metres per second. Depending upon the material to be sprayed, the process gas can be pre-heated up to 1100°C (before expansion). In cold spray, the feedstock is not fed into a flame or arc, but is instead fed into a gas stream. The transit time of the feedstock in the gas stream is not sufficient to cause melting of the feedstock. The main advantages over normal thermal spraying processes include: the powder remains in the solid phase, lower substrate surface temperatures, less oxidation of the powder and the substrate material, no metallurgical transformations and reduced residual stress formation. The powder is accelerated and impacts on the substrate surface where deformation, local heating and bonding occur. By repeating this process a near fully dense layer of increasing thickness can be constructed.

It is preferable to use the cold spray technique, which enables the formation of a well-adhered and relatively uniform coating. A particular advantage of using cold spray is the ability to coat thin substrates of thickness <1.5 mm, according to the present invention, with a low-porosity metal coating (porosity below 10% and most preferably below 5%, as determined using semi-quantitative image analysis), without considerable thermal distortion of the substrate. In practice a near-zero distortion is observed. Another advantage of cold spray is that it can be used to accurately coat regions where insertion of modifying material by other methods, such as by foils or shims, is not possible due to joint complexity. Furthermore, cold spray can provide well adhered coatings that are particularly suitable for machining and storage prior to assembly and welding.

The thermal spray and particularly the cold spray technique provide benefits in the range of material types which may be provided in the layer of the welding surface. In particular these techniques provide for the use of a metallic layer, such as an alloy having a modified composition with respect to the material being welded. The weld modifying material is a metallic material having a majority elemental component which is the same as the first or second metallic workpieces. Thus if the workpieces are an aluminium alloy of a first type, the weld modifying material may be an aluminium alloy of a second type. It is particularly advantageous for the weld modifying material to have a major elemental component which is the same as the workpieces, as it is highly likely that this improves take up of material into the weld pool. Reasons for this include material compatibility (the important component of the weld modifying material is in the correct alloy form) and, in the case of aluminium/silicon, benefits caused by the available eutectic composition melting temperature. If pure silicon were used, it has a far higher melting temperature, causes unfavourable changes in heating dynamics (beam absorption at high speeds would be affected) and would not be as easily assimilated into the weld pool. Similarly when the workpieces are a particular steel, a different steel composition may be sprayed.

Particularly in the case of cold spraying, the layer of weld modifying material preferably has a microstructure comprising deformed particles. The layer of weld modifying material may have a microstructure comprising a porosity of less than 10 percent by volume, more preferably less than 5 percent by volume. It is desirable to minimise the porosity for improving the weld material.

The thickness of the layer of weld modifying material is dependent upon a number of factors including the materials of the workpieces, their geometry, clamping/fit up and the welding process with its associated parameters (welding type, energy, speed, atmosphere, pressure, weld volume and so on). We have found that a layer thickness of between 0.1 mm and 0.5mm typically produces beneficial results to reduce cracking in 6xxx aluminium alloys, even in weld depths above 6mm. If thicker panels were used, more weld modifying material may be required to cope with larger weld pools. For example, welding 6016 alloy having 1.5mm or less of plate thickness and welded with a laser in air at travel speeds around 11 metres per minute, we have found that between 0.1 mm and 0.2mm thickness of modifying material will suffice to prevent weld cracking.

The thicknesses of the layers mentioned above relate to cases where only one of the two workpieces to be joined has a welding surface bearing the coating of weld modifying material. When surfaces of each of the workpieces are coated then the thickness of the material may be reduced accordingly (such as halved for similar coated workpieces). It is also contemplated that two or more different weld modifying materials may be applied either, a different layer for two opposed surfaces to be joined, and/or the use of a multilayer having sublayers of different materials. This latter situation may occur when two or more different materials do not produce a low porosity coating when they are co-sprayed, or in the event that they are mutually reactive or in some other way incompatible.

The process may be utilised with high welding speeds, such as in excess of 5 metres per minute, preferably greater than 10 metres per minute. Thus the process is beneficial for power beam welding which typically occurs at higher speeds than arc welding.

Whilst in principle the first and second workpieces may be arranged in an appropriate geometry for welding before the spraying step, in practice it is usually advantageous to supply the layer of weld modifying material before the workpieces are arranged and clamped for welding. Typically this includes arranging the first and second workpieces in a welding geometry such that the first and second workpieces are adjacent one another. For a butt joint, the welding surface bearing the layer is typically positioned facing the other member. For an overlap weld, especially in thinner workpieces, the welding surface bearing the layer is ideally positioned facing the welding power source and away from the other member, to promote ease of fit up. In thicker workpieces, it may be better for the layer to be where the workpieces contact each other. It is also useful for the weld and coating to be formed from the inside-out of many lapped assemblies for cosmetic reasons (hides coating & weld, easier finishing and painting). A number of different welding geometries are contemplated, which would be obvious to the skilled person

The invention is not intended to be limited to the production of a single localised or elongate weld. The method may further comprise forming welds using the method at a plurality of discrete locations upon one or each of the first and second workpieces by applying the sprayed weld modifying material to predetermined separate locations. Thus welding may proceed at a number of different locations on a particular workpiece, such as might be the case for certain complex products. The welds may be provided serially or simultaneously. Whilst there is significant discussion herein of welding aluminium alloys, particularly 6xxx series alloys, it should be understood that the invention is also applicable in principle to other alloys, including steel and more specialised metallic alloys based upon other elements. In principle the workpiece materials may constitute different alloys, including alloys of different majority elements, provided of course that the microstructure of any such weld alloys formed from mixtures of workpiece compositions are structurally sound. It will be appreciated nevertheless that a particularly beneficial practical application is in the welding of aluminium alloys for the automotive industry such that preferably each of the first and second workpieces are automotive parts.

Articles formed for use according to the invention (where step (a) has been applied), that is workpieces with modifying material pre-deposited at the region where the welds will be formed, are particularly useful for handling and storage due to the robust properties of the modifying material coating. This material is preferably a cold-spray deposited powder which can generally be differentiated from other materials or material deposits by the microstructure, which displays a characteristic deformed-particle pattern yet with low (typically 0-10%, preferably 0-5%) porosity.

As an example, a cold sprayed layer of silicon-containing material (for instance an aluminium alloy with a high silicon content, such as 4xxx alloys) is deposited onto the surface of the crack-sensitive metal component (such as low silicon content 6xxx aluminium alloy) at a location to be joined, prior to welding with a high-speed power beam.

Although the parameters used in the welding method of step (b) will vary according to the type of welding source used, in the case of laser welding, many different laser sources can be used with a variety of powers, stand-off distances, welding speeds, laser spot diameters and focus positions. Equally, when using EB, the invention is applicable to a variety of powers, vacuum conditions, speeds and other parameters.

Although the discussion herein deals mainly with crack-sensitive aluminium alloys, in the context of weld cracking prevention the invention is equally applicable to other metals that suffer from crack sensitivity or other issues during welding, such as 304 austenitic stainless steel used with a 308 modifying material or chromium. In the case of nickel alloys, a niobium-rich modifying material could be beneficial. For various stainless steels, molybdenum additions could be used to prevent segregation and improve corrosion resistance. In many cases this is generally analogous to the relationship between crack-sensitive metals and alloys and the representative filler material that is used when welding them to improve weld properties.

## Brief Description of the Drawings

Some examples of the method according to the invention are now described with reference to the accompanying drawings, in which:

Figure 1 illustrates an example of hot cracking in an aluminium 6xxx alloy welded using a conventional high-speed laser welding operation;
Figure 2 shows a schematic illustration of the method according to an example; and,
Figure 3 shows a flow chart of typical process steps in an automotive application of the invention.
Figure 4 shows a cross section through workpieces joined in a butt configuration by a method according to the invention.
Figure 5 shows a cross section through workpieces joined in a lap configuration by a method according to the invention.

## Description of Preferred Examples

Figure 2 illustrates the typical outline process steps undertaken when applying an embodiment of the invention to a complex part assembly where limited access may be an issue, such as assembly of parts having non-linear joint line configurations.

In this case, a 6061 or 6082 aluminium alloy is used as workpiece 1 with a curved (convex) surface that will form part of a joint line. The convex surface is to become a welding surface and this is then coated using a cold spray head 2. The cold spray head 2 forms part of a commercially available CGT Kinetiks 4000® cold spray system with a polybenzimidazole nozzle (used for depositing ductile materials), mounted on a 6-axis robot. The cold spray system allows the gas temperature, pressure and flow rates to be controlled using a programmable logic controller (PLC) interface.

The cold spray system applies a weld modifying material to the convex surface. In this case the modifying material is shown at 4. This takes the form of alloy 4047 which is provided to the cold spraying system as a powder.

A layer of deposited material is provided to the convex surface and the thickness of the layer is controlled by repeated passes over the surface.

Example parameters used to obtain coatings of varying thickness (dependent on how many coating passes are made), are as follows:

Process and powder carrier gas type: nitrogen.
Gas temperature: 400°C.
Gas pressure: 35bar.
Powder carrier gas flow rate: $3.7m^3.h^{-1}$ ($61.67l.min^{-1}$).
Feedstock: Al-12Si (4047) powder with a particle size range of $60 \pm 13 \mu m$.
Rotational speed of the powder feed wheel: calibrated to 3.4rpm, giving a flow of powder at a feed rate of $14.5-15.10g.min^{-1}$ ($\sim 0.9kg.h^{-1}$).

Substrates were prepared prior to coating by grinding using a 320-grit SiC paper (equivalent to a finish of $46.2 \mu m$) and a 600-grit SiC paper (equivalent to a finish of $25.8 \mu m$), although this step is dependent on the workpiece conditions (corrosion or protective coatings may be present) and is not necessarily required

Gun stand-off: 20mm.
Gun linear spraying velocity (gun traverse speed): 100/150mm.s$^{-1}$.
Gun off-set: 1 mm.

After cold spraying any loose material is removed from the surface. This can be achieved by any practical means such as shaking / air jet, rinsing, brushing etc.

The prepared sections may be examined using optical microscopy and subject to porosity measurement using semi-quantitative image analysis using for example GNU Image Manipulation (GIMP) software.

A suggested procedure for this is as follows:

A metallographic cross-section may be prepared in a hot-mount conductive epoxy resin. To remove any effects associated with cutting the specimen, following mounting, the surface to be viewed may be manually ground back using a 120-grit SiC paper (equivalent to a finish of 125$\mu$m). Progressive grinding with finer grits may be carried out, finishing with 2500-grit SiC paper (equivalent to a finish of 8.4$\mu$m), followed by automated polishing with successively finer diamond pastes (3, 1 and 0.25$\mu$m). Microscopic image acquisition using 200x magnification images may be taken along the polished cross-sections of each coating. Due to the high degree of contrast between the dark pores (voids) and the more highly reflective coating material, a threshold may be accurately set to produce binary images that could give an indication of the total apparent porosity. A total of six fields may be acquired and this procedure achieves a steady representative mean value for the corresponding porosity. Each image may then be cropped to a consistent size to remove the scale bar and label at the bottom. A macro may be used to select all pixels darker than a particular value. This macro may be repeated with a steadily lowering value until a point is reached where the pixels selected corresponded closely to the porosity visible on the image. At this point, the number of pixels may be counted and used to calculate the volume fraction of porosity according to this relationship:

$$\text{Apparent porosity (area\%)} = \text{(Pixels Above Threshold Value)} / \text{(Total Pixels)}$$

This area fraction may be calculated for each image and an average taken from all images.

Using the above procedure on the example discussed above a porosity value for the coatings of ~2% is obtained.

Returning to Figure 2, having coated the convex surface of the first workpiece with the weld modifying aluminium alloy, a second workpiece 3 which is to be joined to the first workpiece 1 is then obtained. As shown in Figure 2, this includes a concave surface which generally conforms with the convex surface of the workpiece 1. Optionally the second workpiece 3 surface may also be coated with the weld modifying material. The workpieces 1,3 with modifying material coating(s) are then butted together. These are clamped in position as per normal welding practice. Once clamped an electron beam system 5 is used to provide an electron beam to the interface between the workpieces (including the weld modifying material). This is performed within a vacuum environment within the electron beam system. The beam transits along a weld line path which follows the interface. Typical process parameters for the electron beam welding are as follows:

| | |
|---|---|
| Accelerating voltage (kV): | 150 |
| Beam Current (mA): | 16 |
| Speed (mm/min): | 1000 |
| Beam deflection: | Circular |
| Amplitude (mA): | 0.15 |
| Frequency (Hz): | 500 |
| Slope in/out (degrees): | 90 |

Some example results from EB welds using different material combinations and modifying material thicknesses are shown in Table 1 below.

**Table 1**

| Experiment Number | Workpiece material | Modifying material | Result |
|---|---|---|---|
| 1 | 6061 - melt run | no | Cracked |
| 2 | 6082 - melt run | no | Cracked |
| 3 | 6061/6061 | no | Cracked |
| 4 | 6082/6082 | no | Cracked |

(continued)

| Experiment Number | Workpiece material | Modifying material | Result |
| --- | --- | --- | --- |
| 5 | 6061/6061 | 4047 cold spray 0.1 mm | Cracked |
| 6 | 6082/6082 | 4047 cold spray 0.1 mm | Cracked |
| 7 | 6061/6061 | 4047 cold spray 0.2 mm | No cracks |
| 8 | 6082/6082 | 4047 cold spray 0.2 mm | No cracks |
| 9 | 6061/6061 | 4047 cold spray 0.4 mm | No cracks |
| 10 | 6082/6082 | 4047 cold spray 0.4 mm | No cracks |

It can be seen from these results that a certain thickness of modifying material is needed to obtain crack free welds in this example.

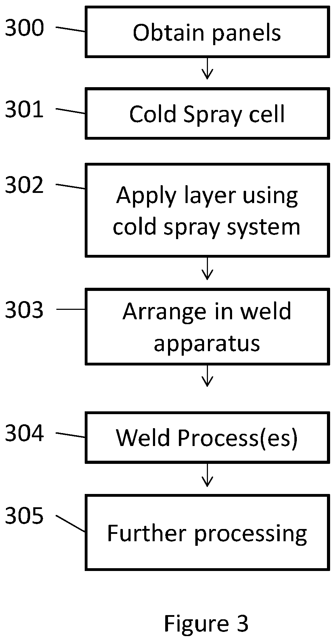

Figure 3 illustrates a typical outline process steps undertaken when applying an example of the invention to an automotive assembly application. Automotive closures typically require joining of two or more press formed panels of aluminium in over-lap configuration. An outer panel, that is the panel to be used on the visible exterior of the automobile, is usually 6xxx alloy, for example 6016. 6xxx aluminium is used for the outer panel due to good surface appearance, dent resistance and required formability.

An inner panel may be 6xxx or another alloy of aluminium. In some cases three panels of aluminium may be used, with the outer panel being 6xxx. The outer and inner panels are required to be joined together.

Referring to step 300 in Figure 3, the panels are initially obtained in a press-formed state (performed off line). After press forming the panels are delivered to a cold spraying cell at step 301. Panels may also be sprayed before press forming, but in this example press forming is performed before cold spraying.

The particular cold spray methodology used is as described in relation to the EB example, above. Therefore, at step 302 weld modifying material powder is cold spray coated onto the surface of one panel only to provide the modifying material. As for the electron beam example, the coating may be applied to one or more panels on one or both surfaces. A 4XXX series aluminium powder is used in this case.

The modifying material is applied in the area where the remote laser weld is to be made. The weld modifying material is selected such as to alter the chemical composition of the weld zone and prevent cracking. A modifying material coating depth of 0.2mm was made in the present example. The cold spray track of modifying material was laid down with a 5mm width in the present case, although this may vary in other applications according to the weld to be made.

With the present example it is not necessary to perform step 302 immediately prior to welding, indeed this step may be performed at an entirely separate facility and at an earlier date/time to the actual welding process. This is due to the stability of the cold sprayed layer.

At step 303 the panels are placed within an automated laser welding apparatus, this including a clamping system to arrange the outer and inner panels in close proximity with their coated region(s) facing in the direction of the power source.

At step 304, the remote laser welding process is performed by a robot (often referred to as 'on the fly welding') or by a laser scanner usually employing galvanometer driven mirrors to allow manipulation of the laser beam. The laser source may be one of many commonly available, including fibre or disc-generated lasers, although these types should not be considered exhaustive and other laser types are or may become available in the future which would obviously be suitable for carrying out the invention.

The aluminium panels are clamped in position. The areas to be joined are typically in overlap configuration for automotive applications, but other joint geometries are also possible of course.

The laser beam is manipulated to cause welding in the desired locations, these locations each having the layer of modifying material attached to their surface. The modifying material may be deposited on any face of the plates being welded.

The laser penetrates the overlapping panels, melting fully or partially the overlapping panel materials. The modifying material in the area of laser heating is also melted, this mixes with the molten panel material resulting in a modified weld metal composition that reduces the susceptibility of crack formation and results in crack free, low porosity joints made at high welding speeds.

Once each of the regions has been welded the joined panel assembly is removed from the welding apparatus and then at step 305 is subjected to any required additional processes, for example the attachment of further components, mounting to a vehicle, surface treatment or finishing.

Some example results from laser welds on two sheets of 1.0mm 6016 in overlap configuration are shown in Table 1 below. Welding speed was varied and welds were produced in samples of uncoated aluminium sheets and samples with a cold spray stack 0.2mm thick on the upper surface of the upper sheet. Other fixed process parameters are listed below:

    IPG 5kW Yb-fibre laser
    Manipulation - Robot driven manipulation employing a Kawasaki FS60
    Stand of distance - 500mm
    Laser spot diameter - 0.6mm
    Focus position - 0mm, at surface of top panel

No shielding gas

**Table 2**

| Experiment Number | Modifying material | Welding speed | Full penetration | Result |
|---|---|---|---|---|
| 1 | no | 10m/minute | Yes | Cracked |
| 2 | no | 12m/minute | Yes | Cracked |
| 3 | no | 12.7m/minute | No | Cracked |
| 5 | 4047 cold spray 0.2 mm on upper surface of upper sheet | 11m/minute | Yes | No Cracks |
| 6 | 4047 cold spray 0.2 mm on upper surface of upper sheet | 12m/minute | Yes | No Cracks |
| 7 | 4047 cold spray 0.2 mm on upper surface of upper sheet | 12.7m/minute | Yes | No Cracks |
| 8 | 4047 cold spray 0.2 mm on upper surface of upper sheet | 14m/minute | No | No cracks |

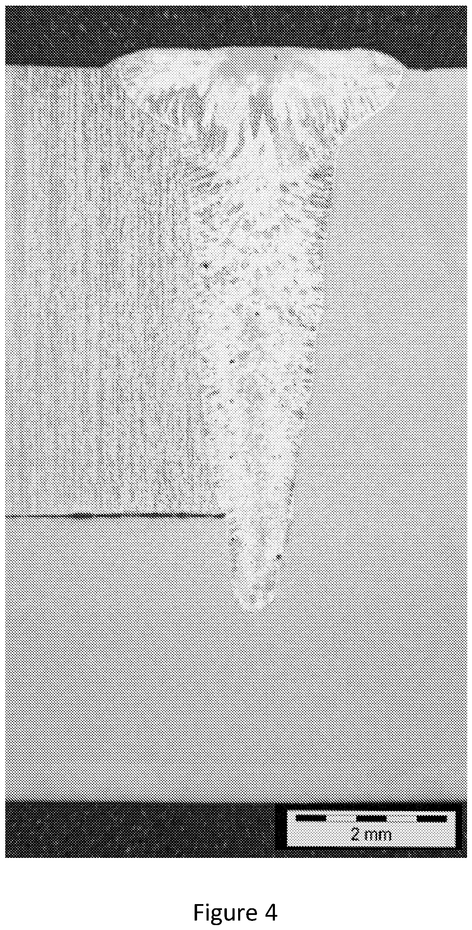

Figure 4 shows a micrograph cross section through welded workpieces from experiment 10 in table 1. In the region where the weld modifying material was deposited, along the centreline of the weld region shown here, no cracks are apparent and the weld is of a good quality.

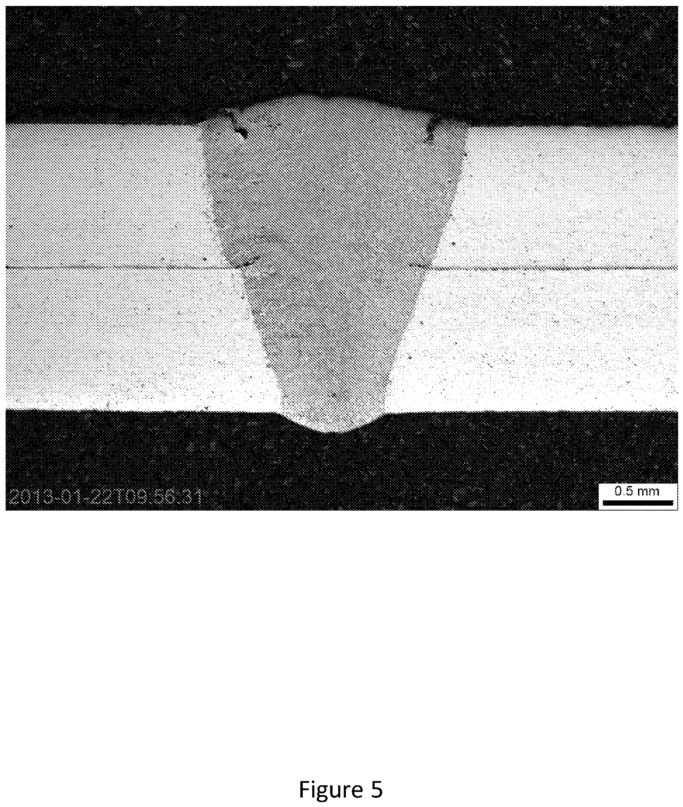

Figure 5 shows a micrograph cross section through welded workpieces from experiment 7 in table 2. The weld modifying material was deposited along the top surface (facing the welding heat source) of the uppermost workpiece. The weld shows no apparent cracking or sheet distortion.

**Claims**

1. A method of welding first and second thin metallic workpieces (1, 3) together, **characterised in that** each of the first and second thin metallic workpieces (1, 3) having a thickness of less than 1.5mm, the method comprising:

    a. applying a layer of weld modifying material (4) to a surface of one or each of the first and second metallic workpieces (1, 3) using a cold spraying process, wherein the weld modifying material (4) is a metallic material and wherein each of the weld modifying material (4), the first metallic workpiece (1) and the second metallic workpiece (3) have a majority elemental component that is the same; and,
    b. welding the first and second metallic workpieces together such that the weld modifying material (4) is incorporated into the weld.

2. A method according to claim 1, wherein the weld modifying material (4) mixes with the material from the first and second workpieces (1, 3) within the weld pool.

3. A method according to claim 1 or claim 2, wherein the welding method is an autogenous method.

4. A method according to any of the preceding claims, wherein the welding in step (b) is performed using a power beam welding method.

**5.** A method according to claim 4, wherein the power beam welding method is electron beam welding or laser welding.

**6.** A method according to any of the preceding claims, wherein the weld modifying material (4) is sprayed as a powder.

**7.** A method according to any of the preceding claims, wherein the layer of weld modifying material has a microstructure comprising deformed particles.

**8.** A method according to any of the preceding claims, wherein the layer of weld modifying material has a microstructure comprising a porosity of less than 10 percent by volume.

**9.** A method according to any of the preceding claims, wherein the thickness of the layer is less than 0.5mm.

**10.** A method according to claim 9, wherein the thickness of the layer is greater than 0.1 mm.

**11.** A method according to any of the preceding claims, further comprising arranging the first and second workpieces (1, 3) in a welding geometry such that the first and second workpieces are adjacent one another.

**12.** A method according to claim 11, wherein the welding geometry is an overlap configuration.

**13.** A method according to any of the preceding claims, wherein the welding speed is greater than 10 metres per minute.

**14.** A method according to any of the preceding claims, further comprising forming welds using the method at a plurality of discrete locations upon one or each of the first and second workpieces by applying the sprayed weld modifying material to predetermined separate locations.

**15.** A method according to any of the preceding claims, wherein each of the first and second workpieces (1, 3) are formed from an aluminium alloy or a steel alloy.

**16.** A method according to any of the preceding claims, wherein each of the first and second workpieces (1, 3) are automotive parts.

**Patentansprüche**

**1.** Verfahren zum Zusammenschweißen eines ersten und eines zweiten, dünnen metallischen Werkstücks (1, 3), **dadurch gekennzeichnet, dass** jedes des ersten und des zweiten, dünnen metallischen Werkstücks (1, 3) eine Dicke von weniger als 1,5 mm aufweist, wobei das Verfahren Folgendes beinhaltet:

a. Auftragen einer Schicht aus Schweißnahtmodifizierungsmaterial (4) auf eine Oberfläche von einem oder jedem des ersten und des zweiten metallischen Werkstücks (1, 3) unter Verwendung eines Kaltspritzprozesses , wobei das Schweißnahtmodifizierungsmaterial (4) ein metallisches Material ist und wobei das Schweißnahtmodifizierungsmaterial (4), das erste metallische Werkstück (1) und das zweite metallische Werkstück (3) jeweils eine Mehrheitselementarkomponente aufweisen, die die gleiche ist; und
b. Zusammenschweißen des ersten und des zweiten Werkstücks, sodass das Schweißnahtmodifizierungsmaterial (4) in die Schweißnaht eingebunden ist.

**2.** Verfahren gemäß Anspruch 1, wobei sich das Schweißnahtmodifizierungsmaterial (4) mit dem Material von dem ersten und dem zweiten Werkstück (1, 3) innerhalb des Schweißbads vermischt.

**3.** Verfahren gemäß Anspruch 1 oder Anspruch 2, wobei das Schweißverfahren ein autogenes Verfahren ist.

**4.** Verfahren gemäß einem der vorhergehenden Ansprüche, wobei das Schweißen in Schritt (b) unter Verwendung eines Energiestrahlschweißverfahrens durchgeführt wird.

**5.** Verfahren gemäß Anspruch 4, wobei das Energiestrahlschweißverfahren Elektronenstrahlschweißen oder Laserschweißen ist.

**6.** Verfahren gemäß einem der vorhergehenden Ansprüche, wobei das Schweißnahtmodifizierungsmaterial (4) als Pulver gespritzt wird.

7. Verfahren gemäß einem der vorhergehenden Ansprüche, wobei die Schicht aus Schweißnahtmodifizierungsmaterial eine Mikrostruktur aufweist, die verformte Partikel beinhaltet.

8. Verfahren gemäß einem der vorhergehenden Ansprüche, wobei die Schicht aus Schweißnahtmodifizierungsmaterial eine Mikrostruktur aufweist, die eine Porosität von weniger als 10 Volumenprozent beinhaltet.

9. Verfahren gemäß einem der vorhergehenden Ansprüche, wobei die Dicke der Schicht weniger als 0,5 mm ist.

10. Verfahren gemäß Anspruch 9, wobei die Dicke der Schicht größer als 0,1 mm ist.

11. Verfahren gemäß einem der vorhergehenden Ansprüche, das ferner das Anordnen des ersten und des zweiten Werkstücks (1, 3) in einer Schweißgeometrie beinhaltet, sodass das erste und das zweite Werkstück nebeneinander liegen.

12. Verfahren gemäß Anspruch 11, wobei wobei die Schweißgeometrie eine Überlappungskonfiguration ist.

13. Verfahren gemäß einem der vorhergehenden Ansprüche, wobei die Schweißgeschwindigkeit größer als 10 Meter pro Minute ist.

14. Verfahren gemäß einem der vorhergehenden Ansprüche, das ferner das Ausbilden von Schweißnähten unter Verwendung des Verfahrens an einer Vielzahl von diskreten Stellen auf einem oder jedem des ersten und des zweiten Werkstücks durch Auftragen des gespritzten Schweißnahtmodifizierungsmaterials an vorbestimmten getrennten Stellen beinhaltet.

15. Verfahren gemäß einem der vorhergehenden Ansprüche, wobei jedes des ersten und des zweiten Werkstücks (1, 3) aus einer Aluminiumlegierung oder einer Stahllegierung gebildet ist.

16. Verfahren gemäß einem der vorhergehenden Ansprüche, wobei jedes des ersten und des zweiten Werkstücks (1, 3) ein Fahrzeugteil ist.

**Revendications**

1. Méthode de soudage l'une à l'autre de première et deuxième pièces métalliques minces (1, 3), **caractérisée en ce que** l'épaisseur de chacune des première et deuxième pièces métalliques minces (1, 3) est inférieure à 1,5 mm, la méthode comprenant :

   a. l'application d'une couche de matériau de modification de soudure (4) sur une surface d'une ou de chacune des première et deuxième pièces métalliques (1, 3) à l'aide d'un procédé de pulvérisation à froid, le matériau de modification de soudure (4) étant un matériau métallique, et chacun du matériau de modification de soudure (4), de la première pièce métallique (1) et de la deuxième pièce métallique (3) possédant un composant élémentaire majoritaire qui est le même ; et
   b. le soudage l'une à l'autre de première et deuxième pièces métalliques de sorte que le matériau de modification de soudure (4) soit incorporé dans la soudure.

2. Méthode selon la revendication 1, le matériau de modification de soudure (4) se mélangeant avec le matériau des première et deuxième pièces (1, 3) au sein du bain de soudure.

3. Méthode selon la revendication 1 ou la revendication 2, la méthode de soudage étant une méthode autogène.

4. Méthode selon une quelconque des revendications précédentes, le soudage à l'étape (b) étant effectué à l'aide d'une méthode de soudage avec faisceau de puissance.

5. Méthode selon la revendication 4, la méthode de soudage avec faisceau de puissance étant le soudage à bombardement électronique ou le soudage au laser.

**6.** Méthode selon une quelconque des revendications précédentes, le matériau de modification de soudure (4) étant pulvérisé sous forme de poudre.

**7.** Méthode selon une quelconque des revendications précédentes, la microstructure de la couche de matériau de modification de soudure comprenant des particules déformées.

**8.** Méthode selon une quelconque des revendications précédentes, la microstructure de la couche de matériau de modification de soudure comprenant une porosité inférieure à 10 pour cent en volume.

**9.** Méthode selon une quelconque des revendications précédentes, l'épaisseur de la couche étant inférieure à 0,5 mm.

**10.** Méthode selon la revendication 9, l'épaisseur de la couche étant supérieure à 0,1 mm.

**11.** Méthode selon une quelconque des revendications précédentes, comprenant en outre l'agencement des première et deuxième pièces (1, 3) dans une géométrie de soudage telle que les première et deuxième pièces sont adjacentes l'une à l'autre.

**12.** Méthode selon la revendication 11, la géométrie de soudage étant une configuration à chevauchement.

**13.** Méthode selon une quelconque des revendications précédentes, la vitesse de soudage étant supérieure à 10 mètres par minute.

**14.** Méthode selon une quelconque des revendications précédentes, comprenant en outre la réalisation de soudures utilisant la méthode à une pluralité d'emplacements discrets sur une ou chacune des première et deuxième pièces en appliquant le matériau de modification de soudure pulvérisé sur des emplacements distincts prédéterminés.

**15.** Méthode selon une quelconque des revendications précédentes, chacune des première et deuxième pièces (1, 3) étant réalisée en alliage d'aluminium ou en acier allié.

**16.** Méthode selon une quelconque des revendications précédentes, chacune des première et deuxième pièces (1, 3) étant des pièces pour automobiles.

101    104

101

102

103

Figure 1

0.5 mm

Figure 2

300 — | Obtain panels |

301 — | Cold Spray cell |

302 — | Apply layer using cold spray system |

303 — | Arrange in weld apparatus |

304 — | Weld Process(es) |

305 — | Further processing |

Figure 3

Figure 4

Figure 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4665294 A
- US 6932879 B